# EUROPEAN PATENT SPECIFICATION

(11) **EP 0 620 093 B1**
(45) Date of publication and mention of the grant of the patent: **09.07.1997**
(21) Application number: 94105281.3
(22) Date of filing: 05.04.1994
(51) Int. Cl.: B29C 37/02

(54) **Deburring and cleaning apparatus for plastic card and the like**
Vorrichtung zum Entgraten und Reinigen von einer Kunststoffkarte od. dgl.
Dispositif d'ébavurage et de nettoyage pour une carte en plastique ou similaire

(30) Priority: 08.04.1993 JP 104938/93
(43) Date of publication of application: 19.10.1994
(73) Proprietor: NTT TELECA CORPORATION, Shinjuku-ku, Tokyo (JP)
(72) Inventor: Yanase, Toshio, Okegawa-shi, Saitama-ken (JP)
(74) Representative: Leyh, Hans, Dr,-Ing.

(56) References cited:
- DE-A- 3 820 975
- US-A- 2 575 744
- US-A- 3 901 639
- US-A- 5 011 395

## Description

This invention relates to a deburring and cleaning apparatus for removing burr produced on edges of a flattened plastic article such as a plastic card or a plastic sheet when it is cut in a predetermined size or dust or like foreign articles sticking to surfaces of a plastic card or the like.

From DE-A-38 20 975 there is known a method to deburr a plastic sheet comprising heating the sheet and melting the burrs. An apparatus to perform this method may comprise at least a heater to heat the plastic article, for which a single heated deburring roller may be applied.

Plastic cards used for various applications such as member's card and ID (identification) cards have a greater thickness and a higher rigidity than prepaid cards such as telephone cards and are liable to form burrs on edges thereof when they are cut in a predetermined size.

As an example for use of cut plastic articles a table-top card printer which can print in full colors on a surface of a plastic card of a comparatively great thickness cut in a predetermined size has been developed and put on the market by a company which is an assignee of the present invention. The card printer is constructed such that a plastic card is electrostatically attracted to a flat attraction table, and a color ink film is pressed strongly against the surface of the plastic card by means of a thermal head while the thermal head and the plastic card are moved relative to each other to print on the surface of the plastic card.

In the card printer just described, if burr remains on edges of the plastic card, the burr is removed from the plastic card and electrostatically attracted to the attraction table, and as the number of printed plastic cards increases, such burr is gradually accumulated on the attraction table and reduces the attracting force of the attraction table for a plastic card. As such reduction of the attracting force proceeds, it finally becomes impossible to fixedly hold a plastic card on the attraction table. As a result, when it is tried to press the thermal head strongly against the surface of a plastic card with a color ink film interposed therebetween while moving the thermal head and the plastic card relative to each other to print on the surface of the plastic card, the plastic card is spaced away from the attraction table, resulting in failure to print.

If deburring of such plastic cards is conventionally performed all by manual operation one by one and edge by edge this is a very cumbersome and time-consuming operation. Further, where deburring of a plastic card is performed by manual operation, removed burr, dust or some other foreign articles stick to the surface of the plastic card and the plastic card is charged with electricity. Consequently, unless a wiping cleaning operation by manual operation is performed using washing liquid in order to remove the foreign articles on the surface of the plastic card and remove the electricity from the plastic card after deburring, it sometimes occurs that printing of the plastic card by a card printer cannot be performed.

It is an object of the present invention to provide a deburring and cleaning apparatus which can remove burr on edges of a plastic card or the like automatically and rapidly with a simple mechanism. In particular after automatic deburring, foreign matters on a surface of a plastic card or the like should be removed. Preferably static electricity should afterwards removed from the plastic card or the like, too.

According to the present invention, there is provided a deburring and cleaning apparatus for a flattened plastic article such as a plastic card or a plastic sheet as set out in claim 1.

Preferred embodiments are subject matters of claims 2 to 6.

In the deburring and cleaning apparatus, if, for example, a plastic card is inserted between the deburring pressure rollers in pair, then since the pressure rollers are heated by the heater and also the plastic card itself is heated by the heater, burr on the edges of the plastic card is melted since it is pressed and heated at the opposite surfaces thereof by the pressure rollers and is further heated by the heater. In this instance, even if the entire plastic card is heated, since it is pressed at the opposite surfaces thereof by the pressure rollers, it is not deformed at all by heat. Thereafter, the plastic card is transferred from the pressure rollers to the conveyor and then transported on the conveyor while it is cooled by wind blasted from the cooling fan for instance. Subsequently, the plastic card is transported in the transporting direction while being held between the adhesive rollers in pair, and thereupon, foreign matters such as dust on the surfaces of the plastic card are removed from the surface of the plastic card by adhesion by the adhesive rollers and transferred to the outer circumferential faces of the adhesive rollers. Thereafter, static electricity may be removed from the plastic card by the discharging unit, whereafter the plastic card is discharged from the deburring and cleaning apparatus.

Consequently, with the deburring and cleaning apparatus, the following advantages are obtained.

First, since the flattened plastic article is held between and transported by the pressure rollers and is simultaneously pressed and heated, burr on edges of the flattened plastic article can be melted and removed automatically and efficiently during transportation of the flattened plastic article.

Second, after such deburring, foreign matters such as dust sticking on the surfaces of the flattened plastic article can be removed automatically by means of the adhesive rollers.

Third, after such removal of foreign articles, static electricity is removed automatically from the flattened plastic article according to a preferred embodiment.

Fourth, since the flattened plastic article is compulsorily cooled before it is forwarded to the adhesive rollers after deburring by heating, otherwise possible deformation of the flattened plastic article and deterioration of the adhesive rollers can be prevented.

Preferred embodiments of the invention are described in detail under reference to the accompanying drawings in which like parts or elements are denoted by like reference characters.
FIG. 1 is a side elevational view showing the internal structure of a deburring and cleaning apparatus to which the present invention is applied;
FIG. 2 is a top plan view of the deburring and cleaning apparatus shown in FIG. 1 with a top wall removed; and
FIG. 3 is a perspective view of a discharging unit of the deburring and cleaning apparatus of FIG. 1.

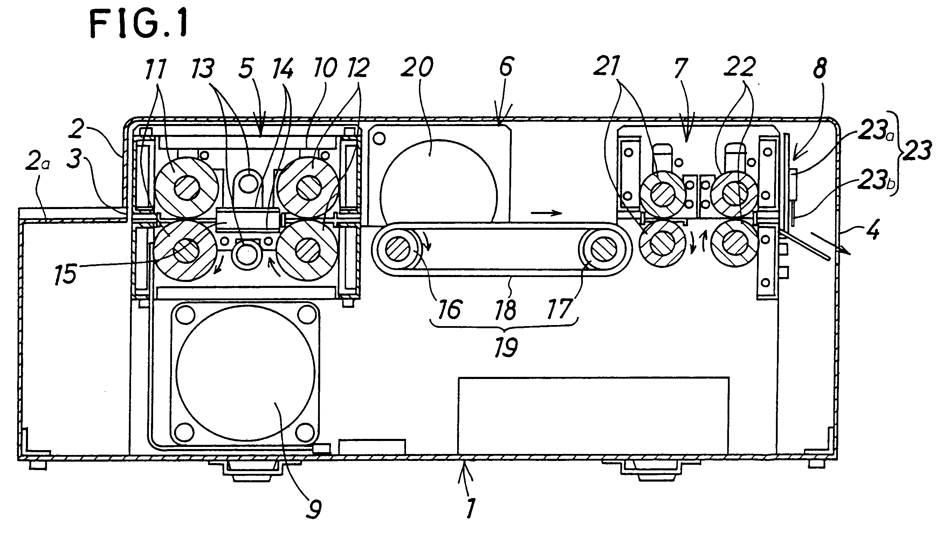

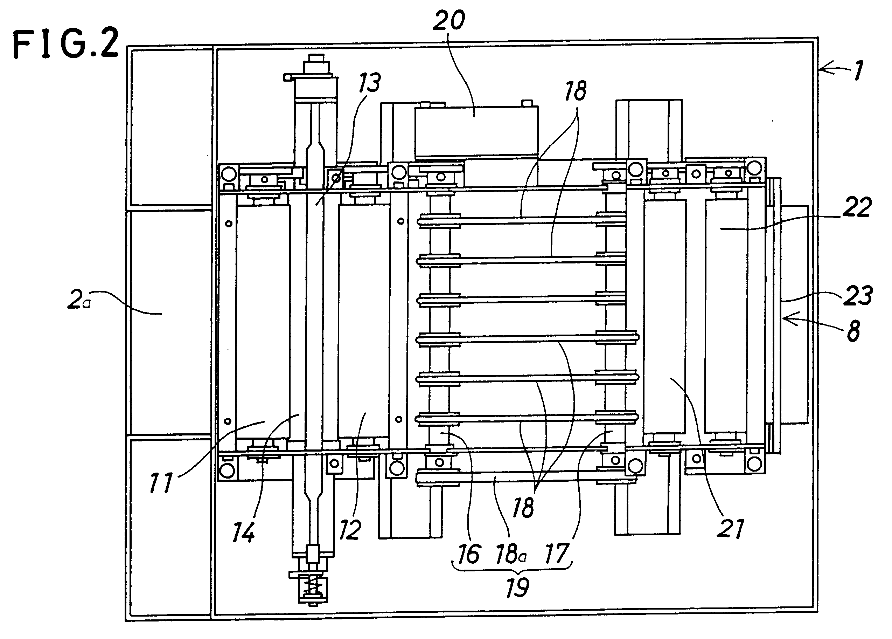

Referring to FIGS. 1 and 2, there is shown a deburring and cleaning apparatus to which the present invention is applied. The deburring and cleaning apparatus is generally constructed as a table-top apparatus with all components accommodated in a single housing 1. A stepped portion 2 is formed on the front side of the housing 1 and has an upper wall which serves as a guide table 2a which guides a plastic card (not shown) when the plastic card is inserted into a card inlet opening 3 formed at a corner portion of the stepped portion 2.

In the housing 1, a deburring station 5, a cooling and transporting station 6, a dust removing station 7 and a discharging station 8 are arranged in this order in a direction from the card inlet opening 3 to a card outlet opening 4 which is formed in the opposite or real wall of the housing 1. A motor 9 for driving the cooling and transporting station 6 to transport a plastic card is installed below the deburring station 5. A plastic card inserted into the card inlet opening 3 is transported in a transporting direction successively through the deburring station 5, the cooling and transporting station 6, the dust removing station 7 and the discharging station 8 and is discharged to the outside through the card outlet opening 4.

The deburring station 5 includes a frame 10 in the form of a box which serves also as a heat shield plate, two pairs of pressure rollers 11 and 12 disposed at different positions in the transporting direction in the frame 10 and supported for rotation on the frame 10, a pair of upper and lower transversely elongated incandescent lamps or halogen lamps 13 disposed between the two pairs of pressure rollers 11 and 12 and serving as heaters, and a pair of upper and lower metal guard plates 14 disposed between the upper and lower lamps 13 and defining therebetween a card passage 15 along which a plastic card is transported. The lamps 13 heat the pressure rollers 11 and 12 and also heat the upper and lower guard plates 14 simultaneously. Each of the pressure rollers 11 and 12 has an outer circumferential face formed as a slip face with silicon or a like material applied thereto, and the lower ones of the pressure rollers 11 and 12 serve as driving rollers which are driven to rotate by the motor 9 while the upper ones of the rollers 11 and 12 serve as driven rollers which are driven to rotate by the driving rollers with a plastic card interposed therebetween. Temperature sensors are installed in the proximity of the pressure rollers 11 and 12, and the lamps 13 are controlled in response to the temperature sensors such that, if it is detected by any of the temperature sensors that the temperature at the surface of a roller is higher than a predetermined level, the lamps 13 are automatically switched off, but the temperature drops to the predetermined level, the infrared rays heaters 13 are switched on automatically.

The cooling and transporting station 6 includes a conveyor 19 which in turn includes a driving pulley 16 driven to rotate by the motor 9 and a driven pulley 17, a plurality of rubber string members 18 disposed in a leftwardly and rightwardly spaced relationship from each other and extending in parallel to each other between and around the pulleys 16 and 17, and a single driving belt 18a extending between ends of the pulleys 16 and 17. The cooling and transporting station 6 further includes a cooling fan 20 disposed alongside the conveyor 19.

The dust removing station 7 includes two pairs of upper and lower adhesive rollers 21 and 22 removably supported for rotation on the housing 1 in a spaced relationship from each other in the transporting direction. Each of the adhesive rollers 21 and 22 is in the form of an elastic roller formed from rubber, urethane, silicon or a like material and having an adhesive layer on an outer circumferential face thereof. The lower ones of the adhesive rollers 21 and 22 serve as driving rollers driven to rotate by the motor 9 while the upper rollers serve as driven rollers driven to rotate by the driving rollers.

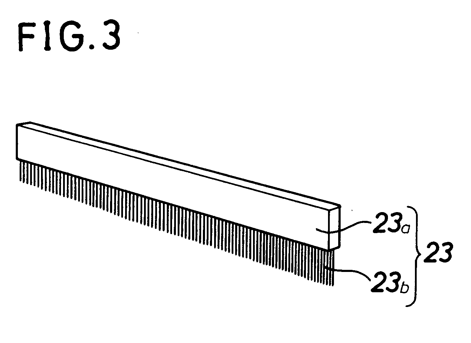

The discharging station 8 includes a discharge brush 23 disposed adjacent the dust removing station 7 above the card outlet opening 4. Referring particularly to FIG. 3, the discharge brush 23 includes a transversely elongated base plate 23a and a large number of conductive metal wires 23b of stainless steel or a like metal material depending in a juxtaposed relationship from the base plate 23a. The conductive metal wires 23b are grounded collectively.

Processing by the present deburring and cleaning apparatus having the construction described above is performed in the following manner.

If a plastic card is inserted into the card inlet opening 3, the plastic card is first held between the pair of upper and roller pressure rollers 11 located at the upstream position in the transporting direction and are then transported by the pressure rollers 11 so that it is drawn into the housing 1 while being pressed and simultaneously heated at the opposite faces thereof by the pressure rollers 11. The plastic card is thus introduced between the upper and lower guard plates 14 and thus passes the card passage 15, whereupon it is heated by the guard plates 14. Thereafter, the plastic card is transported by the pair of upper and lower pressure rollers 12 located at the downstream position in the transporting direction while it is pressed and simultaneously heated by them similarly.

While the plastic card passes through the deburring station 5 in this manner, burr on edges of the plastic card are melted by heat. In this instance, since the plastic card is pressed and heated twice by the two pairs of pressure rollers 11 and 12 at the upstream and downstream positions in the transporting direction and besides the plastic card is pressed and heated by the pressure rollers 12 at the downstream position in the transporting direction after it is preheated by the upper and lower guard plates 14, even if the transporting speed of the plastic card is considerably high, deburring can be performed accurately. Further, since the plastic card is heated in a condition wherein it is pressed at the opposite faces thereof by the two pairs of pressure rollers 11 and 12 at the upstream and downstream positions in the transporting direction, it does not undergo thermal deformation.

The plastic card having passed through the deburring station 5 is then transferred to and thereafter transported by the conveyor 19 in the transporting direction while it is cooled by wind from the cooling fan 20. Thereafter, the plastic card is held between and transported by the two pairs of adhesive rollers 21 and 22 positioned at the upstream and downstream positions in the transporting direction. During such transportation, foreign articles sticking to the surfaces of the plastic card are adhered to the outer circumferential faces of the adhesive rollers 21 and 22 so that they are removed from the plastic card. Thereafter, the plastic card is immediately contacted with the large number of conductive metal wires 23b of the discharge brush 23 so that static electricity is removed from the plastic card, whereafter the plastic card is discharged through the card outlet opening 4.

Plastic cards which were deburred and cleaned to remove foreign articles and from which static electricity was removed were produced in accordance with the present invention, and the plastic cards were inserted into a ready-made card printer to print them in color. It was confirmed that, even after printing of a large number of plastic cards, the performance of the color printer did not present a little bit deterioration, and the plastic cards were printed fine in color.

It is to be noted that, while, in the embodiment described above, pressure rollers and adhesive rollers are provided individually by two pairs in order to assure a high processing speed, they may otherwise be provided individually by one pair. Further, while the lamps 13 are employed as heaters and arranged between the pressure rollers 11 and 12 at the upstream and downstream positions so that they may heat the pressure rollers 11 and 12 and the guard plates 14 at a time, such heater may otherwise be built in each of the pressure rollers 11 and 12. In this instance, the guard plates 14 can be omitted. Further, the discharge brush 23 may be replaced by a discharging unit having a large number of electrode needles to which a high ac voltage is applied to remove static electricity from the plastic card in a non-contacting condition by ac corona discharge.

Further, the deburring and cleaning apparatus of the present invention can be applied not only for deburring of and removal of foreign articles and static electricity from plastic cards but also for deburring of and removal of foreign articles and static electricity from plastic sheets which require deburring, cleaning to remove foreign articles and removal of static electricity.

Having now fully described the invention, it will be apparent to one of ordinary skill in the art that many changes and modifications can be made thereto without departing from the spirit and scope of the invention as set forth herein.

## Claims

1. A deburring and cleaning apparatus for a flattened plastic article such as a plastic card or a plastic sheet, comprising:
at least one pair of deburring pressure rollers (11, 12) for holding and transporting a flattened plastic article therebetween;
a motor (9) for driving said deburring pressure rollers (11, 12) to rotate;
a heater (13) for heating said deburring pressure rollers (11, 12) and the plastic article to melt burr of the plastic article; and
at least one pair of adhesive rollers (21, 22) located on the downstream side of said deburring pressure rollers (11, 12) in a transporting direction in which the plastic article is transported for removing foreign matters from the plastic article.

2. A deburring and cleaning apparatus as set forth in claim 1, **charaterized in that** said heater (13) includes a transversely elongated lamp.

3. A deburring and cleaning apparatus as set forth in claim 1, **characterized in that** it further comprises a discharging unit (8) located on the downstream side of said adhesive rollers (21, 22) in the transporting direction for removing static electricity from the plastic article.

4. A deburring and cleaning apparatus as set forth in claim 3, **characterized in that** said discharging unit (8) includes a discharge brush (23) for contacting with the plastic article to remove static electricity from the plastic article.

5. A deburring and cleaning apparatus as set forth in claim 3, **characterized in that** it further comprises a conveyor (19) located between said deburring pressure rollers (11, 12) and said adhesive rollers (21, 22) for transporting the plastic article, and a cooling fan (20) for cooling the plastic article transported by said conveyor (19).

6. A deburring and cleaning apparatus as set forth in claim 5, **characterized in that** said conveyor (19) includes a driving pulley (16) and a driven pulley (17), and a plurality of rubber string members (18) extending in parallel to each other between and around said driving pulley (16) and said driven pulley (17).

## Patentansprüche

1. Vorrichtung zum Entgraten und Reinigen eines flächigen Kunststoffgegenstandes, wie einer Kunststoffkarte oder einer Kunststoffplatte, welche folgendes aufweist:
wenigstens ein Paar von Entgratungs-Druckwalzen (11, 12), welche den flächigen Kunststoffgegenstand dazwischen halten und befördern;
einen Motor (9) zum Antreiben der Entgratungs-Druckwalzen (11, 12) zur Ausführung einer Drehbewegung derselben;
eine Heizeinrichtung (13) zum Erwärmen der Entgratungs-Druckwalzen (11, 12) und des Kunststoffgegenstandes, um Grate am Kunststoffgegenstand zu erschmelzen; und
wenigstens ein Paar von Haftwalzen (21, 22), welche auf der stromabwärtigen Seite von den EntgratungsDruckwalzen (11, 12) in einer Transportrichtung angeordnet sind, in welcher der Kunststoffgegenstand transportiert wird, und welche zum Entfernen von Fremdstoffen von dem Kunststoffgegenstand dienen.

2. Vorrichtung zum Entgraten und Reinigen nach Anspruch 1, **dadurch gekennzeichnet**, daß die Heizeinrichtung (13) eine in Querrichtung verlaufende, längliche Lampe umfaßt.

3. Vorrichtung zum Entgraten und Reinigen nach Anspruch 1, **dadurch gekennzeichnet**, daß sie ferner eine Entladeeinheit (8) aufweist, welche auf der stromabwärtigen Seite von den Haftwalzen (21, 22) in Transportrichtung zur Abführung von statischer Ladung von dem Kunststoffgegenstand angeordnet ist.

4. Vorrichtung zum Entgraten und Reinigen nach Anspruch 3, **dadurch gekennzeichnet**, daß die Entladeeinheit (8) eine Entladebürste (23) umfaßt, welche den Kunststoffgegenstand kontaktiert und die statische Ladung von dem Kunststoffgegenstand abführt.

5. Vorrichtung zum Entgraten und Reinigen nach Anspruch 3, **dadurch gekennzeichnet**, daß sie ferner einen Förderer (19) aufweist, welcher zwischen den Entgratungs-Druckwalzen (11, 12) und den Haftwalzen (21, 22) zum Befördern des Kunststoffgegenstandes angeordnet ist sowie ein Kühlgebläse (20) aufweist, welches den mittels des Förderers (19) beförderten Kunststoffgegenstand kühlt.

6. Vorrichtung zum Entgraten und Reinigen nach Anspruch 5, **dadurch gekennzeichnet**, daß der Förderer (19) eine treibende Riemenscheibe (16) und eine getriebene Riemenscheibe (17) umfaßt, und daS eine Mehrzahl von aus Kautschuk bestehenden Riemenelementen (18) parallel zueinander zwischen und um die treibende Riemenscheibe (16) und die getriebene Riemenscheibe (17) läuft.

## Revendications

1. Appareil d'ébavurage et de nettoyage pour un article aplati en matière plastique, comme une carte ou une feuille en matière plastique, comprenant :
- au moins une paire de rouleaux de pression d'ébavurage (11, 12) pour tenir et transporter entre eux un article aplati en matière plastique ;
- un moteur (9) pour entraîner lesdits rouleaux de pression d'ébavurage (11, 12) en rotation ;
- un dispositif de chauffage (13) pour chauffer lesdits rouleaux de pression d'ébavurage (11, 12) et l'article en matière plastique afin de faire fondre les bavures sur l'article en matière plastique ; et
- au moins une paire de rouleaux à adhésif (21, 22) situés sur le côté aval desdits rouleaux de pression d'ébavurage (11, 12) dans une direction de transport dans laquelle l'article en matière plastique est transporté, pour enlever les matières étrangères depuis l'article en matière plastique.

2. Appareil d'ébavurage et de nettoyage selon la revendication 1, caractérisé en ce que ledit dispositif de chauffage (13) inclut une lampe allongée dans le sens transversal.

3. Appareil d'ébavurage et de nettoyage selon la revendication 1, caractérisée en ce qu'il comprend en outre une unité de décharge (8) située sur le côté aval desdits rouleaux à adhésif (21, 22) dans la direction de transport, pour enlever l'électricité statique depuis l'article en matière plastique.

4. Appareil d'ébavurage et de nettoyage selon la revendication 3, caractérisé en ce que ladite unité de décharge (8) inclut une brosse de décharge (23) destinée à venir en contact avec l'article en matière plastique pour enlever l'électricité statique depuis l'article en matière plastique.

5. Appareil d'ébavurage et de nettoyage selon la revendication 3, caractérisée en ce qu'il comprend en outre un convoyeur (19) situé entre lesdits rouleaux de pression d'ébavurage (11, 12) et lesdits rouleaux à adhésif (21, 22) pour transporter l'article en matière plastique, et un ventilateur de refroidissement (20) pour refroidir l'article en matière plastique transporté par ledit convoyeur (19).

6. Appareil d'ébavurage et de nettoyage selon la revendication 5, caractérisé en ce que ledit convoyeur (19) inclut une poulie d'entraînement (16) et une poulie menée (17), et une pluralité d'éléments en caoutchouc sous forme de bandelettes (18) qui s'étendent parallèlement les uns aux autres entre ladite poulie d'entraînement (16) et ladite poulie menée (17), et autour desdites poulies.
